# EUROPEAN PATENT APPLICATION

(11) **EP 4 815 183 A1**
(43) Date of publication of application: **30.09.2026**
(21) Application number: 23959913.7
(22) Date of filing: 30.11.2023
(51) Int. Cl.: H01M 50/59, H01M 10/0587

(54) **ELECTRODE ASSEMBLY, PREPARATION METHOD THEREFOR, BATTERY CELL, BATTERY, ELECTRICAL DEVICE AND ENERGY STORAGE DEVICE**

(71) Applicant: Contemporary Amperex Technology Co., Limited, Ningde, Fujian 352100 (CN)
(72) Inventor: YANG, Daoshuan, Ningde, Fujian 352100 (CN); WU, Yongjiang, Ningde, Fujian 352100 (CN); LIN, Wenfa, Ningde, Fujian 352100 (CN)
(74) Representative: Ziebig Hengelhaupt Intellectual Property Attorneys Patentanwaltskanzlei PartGmbB
(86) International application number: PCT/CN2023/135705
(87) International publication number: WO 2025/112002

(57) **Abstract**

Disclosed in the present disclosure are an electrode assembly, a preparation method therefor, a battery cell, a battery, an electrical device and an energy storage device. The electrode assembly comprises: a jellyroll structure, the jellyroll structure being formed by rolling up a laminate comprising a positive electrode sheet and a negative electrode sheet, a separator being interposed between the positive electrode sheet and the negative electrode sheet, the jellyroll structure comprising bending zones, the positive electrode sheet comprising at least one positive electrode bending part located in the bending zones, the negative electrode sheet comprising at least one negative electrode bending part located in the bending zones, and in the rolling axis direction of the jellyroll structure, two ends of the separator exceeding the positive electrode bending part and the negative electrode bending part; and a protective layer attached to the surface of the positive electrode bending part and/or the surface of the negative electrode bending part, at least one end of the protective layer exceeding the separator in the rolling axis direction of the jellyroll structure.

## Description

### TECHNICAL FIELD

The present disclosure relates to the field of battery technology, and in particular, to an electrode assembly and a preparation method thereof, a battery cell, a battery, an electric apparatus, and an energy storage apparatus.

### BACKGROUND

New energy batteries are increasingly widely used in life and industry. For example, new energy vehicles equipped with batteries have been widely used. In addition, batteries are increasingly used in the fields such as energy storage.

In new energy vehicles equipped with batteries, batteries can be configured to provide all or part of the power. In the field of energy storage, batteries can be installed in energy storage cabinets or directly installed on the user side. In the development of battery technology, in addition to improving the performance of battery cells, the problem of thermal runaway in battery cells is also a non-negligible problem. Therefore, how to reduce the risk of thermal runaway in battery cells is a technical problem that needs to be solved in battery technology.

### SUMMARY

To solve the above technical problem, the present disclosure provides an electrode assembly and a preparation method thereof, a battery cell, a battery, an electric apparatus, and an energy storage apparatus, which can reduce the risk of thermal runaway in the battery.

The present disclosure is implemented by the following technical solutions.

According to a first aspect of the present disclosure, an electrode assembly is provided, including: a wound structure, where the wound structure is formed by winding a laminate including a positive electrode sheet and a negative electrode sheet, a separator is sandwiched between the positive electrode sheet and the negative electrode sheet, the wound structure includes a bent region, the positive electrode sheet includes at least one positive electrode bent portion located in the bent region, the negative electrode sheet includes at least one negative electrode bent portion located in the bent region, and along a winding axis direction of the wound structure, two ends of the separator extend beyond the positive electrode bent portion and the negative electrode bent portion; and a protective layer attached to a surface of the positive electrode bent portion and/or a surface of the negative electrode bent portion, where along the winding axis direction of the wound structure, at least one end of the protective layer extends beyond the separator.

The protective layer attached to the positive electrode bent portion and the negative electrode bent portion can reduce the risks of fracture and falling-off of an active material when the positive electrode bent portion and the negative electrode bent portion are bent, thereby reducing the risk of thermal runaway in the electrode assembly, the battery cell, and even the entire battery. The protective layer extending beyond the separator can enable an adhesive tape to fully cover the positive and negative electrode sheets for reliable protection, and can also allow for visual inspection of an attachment position of the protective layer through an exposed portion during a manufacturing process of the battery to timely confirm the accuracy of the attachment position.

In some embodiments, the protective layer is attached to the surface of the positive electrode bent portion and/or the surface of the negative electrode bent portion through adhesion or electrostatic adsorption. The adhesion method provides a more secure attachment. The electrostatic adsorption method reduces the possibility of damage to the electrode sheet during attachment.

In some embodiments, along a stacking direction of the wound structure, each positive electrode bent portion includes a first concave surface and a first convex surface located on two opposite sides; and the protective layer includes a first protective layer and a second protective layer respectively attached to the first concave surface and the first convex surface. The protective layers are attached to both the first concave surface and the first convex surface on front and back sides of the positive electrode bent portion, so that the risk of fracture of the positive electrode bent portion can be further reduced, and the risk of falling-off of positive electrode active material layers on two surfaces of the positive electrode bent portion can be reduced, thereby reducing the risks such as short circuit and thermal runaway.

In some embodiments, along the stacking direction of the wound structure, each negative electrode bent portion includes a second concave surface and a second convex surface located on two opposite sides; and the protective layer includes a third protective layer and a fourth protective layer respectively attached to the second concave surface and the second convex surface.

The protective layers are attached to both the second concave surface and the second convex surface on the front and back sides of the negative electrode bent portion, so that the risks of short circuit and thermal runaway caused by fracture of the negative electrode bent portion can be further reduced, and the risk of falling-off of negative electrode active material layers on two surfaces of the negative electrode bent portion can be reduced, thereby reducing the influence on the capacity and cycle life of the battery.

In some embodiments, the positive electrode sheet includes a positive electrode current collector and a positive electrode active material layer disposed on a surface of the positive electrode current collector, and the protective layer covers the positive electrode active material layer at the positive electrode bent portion in the positive electrode sheet; and/or the negative electrode sheet includes a negative electrode current collector and a negative electrode active material layer disposed on a surface of the negative electrode current collector, and the protective layer covers the negative electrode active material layer at the negative electrode bent portion in the negative electrode sheet.

The protective layer covers the positive electrode active material layer at the positive electrode bent portion and/or the negative electrode active material layer at the negative electrode bent portion, so that the positive electrode active material layer and the negative electrode active material layer can be fully protected, and the risk of falling-off of the positive electrode active material layer and the negative electrode active material layer can be reduced.

In some embodiments, at the positive electrode bent portion, along the winding axis direction, a first edge of the protective layer located at the positive electrode bent portion extends beyond the positive electrode active material layer but does not extend beyond the separator, and a second edge of the protective layer located at the positive electrode bent portion extends beyond the separator, where the first edge is located at one end of the protective layer along the winding axis direction, and the second edge is located at the other end of the protective layer along the winding axis direction; and/or at the negative electrode bent portion, along the winding axis direction, a third edge of the protective layer located at the negative electrode bent portion extends beyond the negative electrode active material layer but does not extend beyond the separator, and a fourth edge of the protective layer located at the negative electrode bent portion extends beyond the separator, where the third edge is located at one end of the protective layer along the winding axis direction, and the fourth edge is located at the other end of the protective layer along the winding axis direction.

Since the protective layer covers the positive and negative electrode active material layers and has only one edge extending beyond the separator, an adhesion position of the protective layer at the positive electrode bent portion can be visually inspected. Compared with a case where two edges both extend beyond the separator, the risk of tearing of the separator due to adhesion to a roller is reduced.

In some embodiments, a positive electrode tab is disposed on a side of the positive electrode current collector along the winding axis direction, and the first edge of the protective layer is located on the same side as the positive electrode tab along the winding axis direction; and/or a negative electrode tab is disposed on a side of the negative electrode current collector along the winding axis direction, and the third edge of the protective layer is located on the same side as the negative electrode tab along the winding axis direction. The edge of the protective layer on the same side as the tab does not extend beyond the separator, so that the risk of false alarms from a detection device on the side of the tab can be avoided.

In some embodiments, along the winding axis direction, the protective layer extends beyond the positive electrode bent portion by a length of 4 mm to 6 mm; and/or along the winding axis direction, the protective layer extends beyond the negative electrode bent portion by a length of 4 mm to 6 mm.

The protective layer extends beyond the positive and negative electrode bent portions by a specified length, so that a portion of the protective layer extending outward can be easily visually inspected, thereby making it easy to determine the position of the protective layer and also helping to determine the attachment position of the protective layer on the positive and negative electrode sheets.

In some embodiments, along the winding axis direction, the protective layer extends beyond the separator by a length of 1 mm to 4 mm.

Controlling the length by which the protective layer extends beyond the separator to be 1 mm to 4 mm can facilitate visual inspection of an adhesion position of the protective layer and reduce the risk of tearing of the protective layer due to adhesion to the roller.

In some embodiments, along the winding axis direction, one of the first protective layer and the second protective layer extends beyond the other on at least one end.

In some embodiments, the first protective layer includes a first end and a second end located at two ends along a winding direction of the wound structure; the second protective layer includes a third end and a fourth end located at two ends along the winding direction; the third end and the first end are located on a same side along the winding direction and staggered from each other along the winding direction; and/or the fourth end and the second end are located on a same side along the winding direction and staggered from each other along the winding direction.

The two ends on the same side of the first protective layer and the second protective layer are staggered from each other, so that compared to a case where the two ends on the same side of the first protective layer and the second protective layer are not staggered from each other, step heights of ends after stacking of the protective layers can be reduced. Therefore, during an extrusion molding process of the wound structure, buffering can be formed for the extrusion of the separator, reducing the risk of wrinkles in the separator, thereby reducing the possibility that pores of the separator are blocked due to the wrinkles.

In some embodiments, a staggered length between the third end and the first end along the winding direction is greater than zero and less than or equal to 2 mm; and/or a staggered length between the fourth end and the second end along the winding direction is greater than zero and less than or equal to 2 mm.

Controlling the staggered length between the two ends on the same side of the first protective layer and the second protective layer along the winding direction within a range greater than zero and less than or equal to 2 mm can reduce both the risk of the wrinkles in the separator and the risk of tearing due to adhesion to the roller.

In some embodiments, the third protective layer includes a fifth end and a sixth end in the winding direction of the wound structure; the fourth protective layer includes a seventh end and an eighth end in the winding direction; the seventh end and the fifth end are located on a same side in the winding direction and staggered from each other along the winding direction; and/or the eighth end and the sixth end are located on a same side in the winding direction and staggered from each other along the winding direction.

The two ends on the same side of the third protective layer and the fourth protective layer are staggered from each other, so that compared to a case where the two ends on the same side of the third protective layer and the fourth protective layer are not staggered from each other, step heights of ends after stacking of the protective layers can be reduced. Therefore, during the extrusion molding process of the wound structure, buffering can be formed for the extrusion of the separator, reducing the risk of wrinkles in the separator, thereby reducing the possibility that pores of the separator are blocked due to the wrinkles.

In some embodiments, a staggered length between the seventh end and the fifth end along the winding direction is greater than zero and less than or equal to 2 mm; and/or a staggered length between the eighth end and the sixth end along the winding direction is greater than zero and less than or equal to 2 mm.

Controlling the staggered length of the two ends on the same side of the third protective layer and the fourth protective layer along the winding direction within a range greater than zero and less than or equal to 2 mm can reduce both the risk of the wrinkles in the separator and the risk of tearing due to adhesion to the roller.

In some embodiments, the wound structure includes a straight region connected to the bent region; and at least one end of the protective layer in the winding direction of the wound structure extends to a boundary between the straight region and the bent region or extends beyond the boundary to the straight region along the winding direction.

Thus, the protective layer located at the positive electrode bent portion can cover the positive electrode active material layer in the winding direction, so that the positive electrode active material layer is fully protected; and the protective layer located at the negative electrode bent portion can cover the negative electrode active material layer in the winding direction, so that the negative electrode active material layer is fully protected.

In some embodiments, the positive electrode sheet includes a plurality of positive electrode bent portions located in the bent region and arranged along the stacking direction of the wound structure, and the protective layer is attached to at least the positive electrode bent portion located on an innermost side along the stacking direction; and/or the negative electrode sheet includes a plurality of negative electrode bent portions located in the bent region and arranged along the stacking direction of the wound structure, and the protective layer is attached to at least the negative electrode bent portion located on the innermost side along the stacking direction.

Since the positive electrode bent portion and the negative electrode bent portion located on the innermost side in the stacking direction are subjected to a greater tensile force, the fracture or the falling-off of the active material is more easily caused. Therefore, the protective layer at least attached to the positive electrode bent portion and the negative electrode bent portion located on the innermost side can protect the positive electrode bent portion and the negative electrode bent portion located on the innermost side, thereby helping to reduce the risks of short circuit and thermal runaway in the entire battery.

In some embodiments, a material of the protective layer is polyethylene terephthalate, polypropylene, polyethylene, polyimide, or non-woven fabric.

In some embodiments, at least one of the second protective layer on the first convex surface is provided with pores for ions to pass through; or the first protective layer on the first concave surface and the second protective layer on the first convex surface each include a blocking portion for blocking ions.

The first protective layer on the first concave surface and the second protective layer on the first convex surface are provided with the pores for ions to pass through. This can reduce the risks of fracture of the positive electrode bent portion and falling-off of respective active materials, and also reduce the influence of the protective layer attached to the positive electrode bent portion on the release of a positive electrode active material from the positive electrode active material layer at the positive electrode bent portion. Through the blocking portion for blocking ions on the first protective layer, some of lithium ions provided by the positive electrode active material layer can be blocked, thereby reducing lithium precipitation.

In some embodiments, the third protective layer on the second concave surface and the fourth protective layer on the second convex surface are each provided with pores for ions to pass through.

Since the third protective layer on the second concave surface and the fourth protective layer on the second convex surface of the negative electrode bent portion are each provided with the pores for ions to pass through, the negative electrode bent portion can be protected, and lithium precipitation can also be reduced.

In some embodiments, the protective layer provided with pores for ions to pass through has an air permeability of 220±70 sec/100 cc.

In some embodiments, a pore size of the pores is 100 nm to 400 nm.

According to a second aspect of the present disclosure, a battery cell is provided, including: a housing body and at least one electrode assembly according to the first aspect of the present disclosure, where the electrode assembly is accommodated in the housing body.

According to a third aspect of the present disclosure, a battery is provided, including: a box and at least one battery cell according to the second aspect of the present disclosure, where the battery cell is accommodated in the box.

According to a fourth aspect of the present disclosure, an electric apparatus is provided, where the electric apparatus includes at least one battery cell according to the second aspect of the present disclosure or battery according to the third aspect of the present disclosure configured to supply electrical energy.

According to a fifth aspect of the present disclosure, an energy storage apparatus is provided, including the battery according to the third aspect of the present disclosure, where the battery is capable of storing electrical energy and supplying electrical energy.

According to a sixth aspect of the present disclosure, a preparation method of an electrode assembly is provided, including: providing a positive electrode sheet, a negative electrode sheet, and a separator; attaching a protective layer to the positive electrode sheet and/or the negative electrode sheet; and stacking and winding the positive electrode sheet, the negative electrode sheet, and the separator to form a wound structure, where in the wound structure, the separator is sandwiched between the positive electrode sheet and the negative electrode sheet; the wound structure includes a bent region; the positive electrode sheet includes at least one positive electrode bent portion located in the bent region; the negative electrode sheet includes at least one negative electrode bent portion located in the bent region; along a winding axis direction of the wound structure, two ends of the separator extend beyond the positive electrode bent portion and the negative electrode bent portion; the protective layer is adhered to a surface of the positive electrode bent portion and/or a surface of the negative electrode bent portion; and along the winding axis direction of the wound structure, at least one end of the protective layer extends beyond the separator.

### BRIEF DESCRIPTION OF DRAWINGS

Those of ordinary skill in the art will be clear about various other advantages and benefits by reading the detailed description of the preferred embodiments below. The accompanying drawings are merely intended to illustrate the preferred embodiments and are not intended to limit the present disclosure. Moreover, throughout the accompanying drawings, the same reference signs represent the same components. In the accompanying drawings:
FIG. 1 is a schematic structural diagram of a vehicle according to some embodiments of the present disclosure;
FIG. 2 is a three-dimensional schematic exploded view of a battery according to some embodiments of the present disclosure;
FIG. 3 is a three-dimensional schematic diagram of a battery module according to some embodiments of the present disclosure;
FIG. 4 is a three-dimensional schematic exploded view of a battery cell according to some embodiments of the present disclosure;
FIG. 5 is a three-dimensional schematic diagram of an electrode assembly according to some embodiments of the present disclosure;
FIG. 6 is a schematic cross-sectional view of an electrode assembly according to some embodiments of the present disclosure;
FIG. 7 is a partially enlarged view in FIG. 6;
FIG. 8 is a schematic cross-sectional view at position z-z in FIG. 7;
FIG. 9 is a schematic structural diagram of a positive electrode sheet of an electrode assembly unfolded along a winding direction according to some embodiments of the present disclosure;
FIG. 10 is a schematic structural diagram of a negative electrode sheet of an electrode assembly unfolded along a winding direction according to some embodiments of the present disclosure;
FIG. 11 is a schematic cross-sectional view of an electrode assembly according to some other embodiments of the present disclosure;
FIG. 12 is a partially enlarged view in FIG. 11;
FIG. 13 is a schematic structural diagram of a positive electrode sheet of an electrode assembly unfolded along a winding direction according to some other embodiments of the present disclosure;
FIG. 14 is a schematic structural diagram of a negative electrode sheet of an electrode assembly unfolded along a winding direction according to some other embodiments of the present disclosure; and
FIG. 15 is a flowchart of a preparation method of an electrode assembly according to some embodiments of the present disclosure.

Description of reference signs:
1000. vehicle;
100. battery; 200. controller; 300. motor;
110. box; 120. first box portion; 130. second box portion; 140. battery module; 150. accommodating space; 160. battery cell;
10. electrode assembly; 20. housing; 21. housing body; 22. end cover; 30.
positive electrode terminal; 40. negative electrode terminal; 50. pressure relief mechanism;
11. positive electrode sheet; 111. positive electrode bent portion; 112. positive electrode current collector; 112a. positive electrode current collecting portion; 112b. positive electrode protrusion (positive electrode tab); 113. positive electrode active material layer; 111a. first concave surface; 111b. first convex surface;
12. negative electrode sheet; 121. negative electrode bent portion; 122. negative electrode current collector; 122a. negative electrode current collecting portion; 122b. negative electrode protrusion (positive electrode tab); 123. negative electrode active material layer; 124. insulating layer; 121a. second concave surface; 121b. second convex surface;
13. separator;
14. protective layer; 141. first protective layer; 142. second protective layer; 143. third protective layer; 144. fourth protective layer; 141a. first end; 141b. second end; 142a. third end; 142b. fourth end; 143a. fifth end; 143b. sixth end; 144a. seventh end; 144b. eighth end; 14a. first edge; 14b. second edge; 14c. third edge; 14d. fourth edge;
A. bent region; B. straight region; C. winding direction; K. winding axis direction; E. stacking direction; length d1; and length d2.

### DESCRIPTION OF EMBODIMENTS

The following describes in detail embodiments of technical solutions of the present disclosure with reference to the accompanying drawings. The following embodiments are merely intended for a clearer description of the technical solutions of the present disclosure and therefore are used as just examples which do not constitute any limitations on the protection scope of the present disclosure.

Unless otherwise defined, all technical and scientific terms used herein shall have the same meanings as commonly understood by those skilled in the art to which the present disclosure relates. The terms used herein are intended to merely describe the specific embodiments rather than to limit the present disclosure. The terms "include", "comprise", "have", and any other variations thereof in the specification, claims and brief description of drawings of the present disclosure are intended to cover non-exclusive inclusions.

In the description of the embodiments of the present disclosure, the technical terms "first", "second", "third", "fourth", "fifth", "sixth", "seventh", "eighth", and the like are merely intended to distinguish between different objects, and shall not be understood as any indication or implication of relative importance or any implicit indication of the number, specific sequence, or primary-secondary relationship of the technical features indicated. In the description of the embodiments of the present disclosure, "a plurality of" means two or more, unless otherwise explicitly and specifically defined.

Reference to "embodiment" in the specification means that specific features, structures, or characteristics described with reference to an embodiment may be included in at least one embodiment of the present disclosure. The word "embodiment" appearing in various places in this specification does not necessarily refer to the same embodiment or an independent or alternative embodiment that is exclusive of other embodiments. It is explicitly or implicitly understood by those skilled in the art that the embodiments described herein may be combined with other embodiments.

In the description of the embodiments of the present disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of the present disclosure, the orientations or positional relationships indicated by the technical terms "length", "width", "thickness", "inner", "outer", "stacking direction", "winding axis direction", and the like are based on the orientations or positional relationships shown in the accompanying drawings, and are merely for ease and brevity of description of the embodiments of the present disclosure rather than indicating or implying that the means or elements mentioned must have specific orientations or must be constructed or manipulated according to specific orientations, and therefore shall not be construed as any limitation on the embodiments of the present disclosure.

In the description of the embodiments of the present disclosure, unless otherwise expressly specified and defined, the terms "mounting", "connection", "join", and "fastening" should be understood in a broad sense. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Those of ordinary skill in the art can understand specific meanings of these terms in the embodiments of the present disclosure as suitable to specific situations.

In the description of the embodiments of the present disclosure, unless otherwise expressly specified and defined, the technical term "contact" should be understood in a broad sense. It may refer to a direct contact, a contact through an intermediate medium layer, a contact with substantially no interaction force between two objects in contact with each other, or a contact with interaction force between two objects in contact with each other.

The present disclosure is described in detail below.

Currently, new energy batteries are increasingly widely used in life and industry. New energy batteries are not only used in energy storage power systems such as hydropower, thermal power, wind power, and solar power stations, but are also widely used in electric vehicles such as electric bicycles, electric motorcycles, and electric cars, as well as in various fields such as aerospace. With the continuous expansion of the application fields of new energy batteries, their market demand is also continuously increasing.

In a preparation process of a jelly roll, a wound electrode assembly needs to be pressed and shaped to eliminate wrinkles and internal air in the separator, reduce the risk of short circuit, and improve surface flatness for ease of placement of the electrode assembly into a housing. When the electrode assembly is subjected to extrusion, an active material on an electrode sheet at a bent portion formed by winding may fall off, and there may even be the risk of fracture of the electrode sheet at the bent position. The falling-off of the active material on the electrode sheet refers to falling-off of coating. Both the fracture of the electrode sheet and the falling-off of the active material on the electrode sheet may lead to the problem of thermal runaway in a battery. The fracture of the electrode sheet makes the separator easily pierced and may cause a short circuit between adjacent positive and negative electrode sheets, thus leading to the problem of thermal runaway and causing explosion and fire in the battery. The falling-off of the active material on the electrode sheet not only affects the capacity of the battery but may also lead to lithium precipitation.

During charging of a lithium-ion battery or battery cell, when lithium intercalation sites in a negative electrode active material layer of a negative electrode sheet are less than lithium ions that can be provided by a positive electrode active material layer of a positive electrode sheet adjacent thereto, lithium precipitation is prone to occur. Lithium precipitation not only degrades the performance of the lithium-ion battery and significantly shortens the cycle life, but also limits the fast charging capacity of the lithium-ion battery. In addition, when lithium precipitation occurs in the lithium-ion battery, the precipitated lithium metal is very active and can react with an electrolyte at low temperatures, causing a decrease in a self-heating onset temperature of the battery and an increase in a self-heating speed, thus posing the risk of thermal runaway. Furthermore, when lithium precipitation is severe, the deintercalated lithium ions can form lithium dendrites on a surface of the negative electrode sheet, and the lithium dendrites can easily pierce a separator, causing a short circuit between adjacent positive and negative electrode sheets, thus posing the risk of thermal runaway.

Lithium precipitation is prone to occur in a bent region of a wound electrode assembly (jelly roll). The reason for lithium precipitation is mainly because a positive electrode sheet and a negative electrode sheet located in the bent region need to be bent, and a negative electrode sheet on an inner side of a positive electrode sheet is prone to insufficient lithium intercalation space, which may lead to lithium intercalation sites in a negative electrode active material layer of the negative electrode sheet being less than lithium ions that can be provided by a positive electrode active material layer of a positive electrode sheet adjacent thereto, thus causing lithium precipitation. In addition, when the electrode assembly is subjected to extrusion deformation, surfaces of the positive electrode sheet and the negative electrode sheet in the bent region will be subjected to a great tensile force, especially a positive electrode sheet located on an innermost layer and a negative electrode sheet located on an innermost layer are subjected to a greater tensile force. This can easily lead to falling-off of respective active material layers on the positive electrode sheet and the negative electrode sheet, thus affecting the capacity of the battery. In addition, this may even lead to the risk of fracture of the positive electrode sheet and the negative electrode sheet in the bent region, thus leading to the risk of thermal runaway in the battery.

Attachment of a protective layer (for example, application of an adhesive) to the positive electrode sheet and the negative electrode sheet in the bent region can reduce the risks of cracking of the electrode sheets and falling-off of active materials. However, the inventors have found that even if the adhesive is applied to the positive electrode sheet and the negative electrode sheet in the bent region, there may still be battery safety issues. In view of this, the inventors have attempted to analyze the reasons and believed that the possible reason is as follows: since the electrode sheets are wound after the adhesive is applied, the adhesive is wrapped in the wound structure, and it is impossible to determine whether the application position of the adhesive is exactly in the bent region. If the application position of the adhesive is not in the bent region, the risks such as falling-off of coating and fracture in the bent region still exist. Therefore, when the application position of the adhesive cannot be accurately determined, there are still the risks of short circuit and thermal runaway caused by falling-off of coating and fracture of the electrode sheets.

In view of this, an embodiment of the present disclosure provides an electrode assembly, including: a wound structure, where the wound structure is formed by winding a laminate including a positive electrode sheet and a negative electrode sheet, a separator is sandwiched between the positive electrode sheet and the negative electrode sheet, the wound structure includes a bent region, the positive electrode sheet includes at least one positive electrode bent portion located in the bent region, the negative electrode sheet includes at least one negative electrode bent portion located in the bent region, and along a winding axis direction of the wound structure, two ends of the separator extend beyond the positive electrode bent portion and the negative electrode bent portion; and a protective layer attached to a surface of the positive electrode bent portion and/or a surface of the negative electrode bent portion, where along the winding axis direction of the wound structure, at least one end of the protective layer extends beyond the separator.

The protective layer attached to the surface of the positive electrode bent portion and/or the surface of the negative electrode bent portion can reduce the risks of fracture of the positive electrode sheet and/or the negative electrode sheet in the bent region and falling-off of an active material, thereby reducing the risk of thermal runaway in the electrode assembly, the battery cell, and even the entire battery. The protective layer extending beyond the separator can enable the protective layer to fully cover the positive and negative electrode sheets for reliable protection, and can also allow for visual inspection of an adhesion position of the protective layer during the manufacturing process (for example, during a winding process) of the battery, thereby allowing for accurate determining of the adhesion position.

The electrode assembly according to this embodiment of the present disclosure is applied to a battery cell and a battery.

The battery according to this embodiment of the present disclosure can be used in, but is not limited to, electric apparatuses such as energy storage power systems, vehicles, ships, or aircraft.

A plurality of such batteries according to this embodiment of the present disclosure may also be assembled into a battery pack for use. The battery pack can also be used in, but is not limited to, electric apparatuses such as energy storage power systems, vehicles, ships, or aircraft.

An embodiment of the present disclosure provides an electric apparatus including the above battery or battery pack configured to supply electrical energy. The electric apparatus may be, but is not limited to, a mobile phone, a tablet, a laptop computer, an electric toy, an electric tool, an electric bicycle, an electric vehicle, a ship, an aerospace vehicle, or the like. The electric toy may include a fixed or mobile electric toy, such as a game console, an electric toy car, an electric toy ship, or an electric toy airplane. The aerospace vehicle may include an airplane, a rocket, a space shuttle, a spaceship, and the like.

An embodiment of the present disclosure further provides an energy storage apparatus including the above battery or battery pack. The energy storage apparatus may be, but is not limited to, an energy storage cabinet, an energy storage container, or the like.

For ease of description, an electric apparatus according to an embodiment of the present disclosure being a vehicle 1000 is used as an example for description of the following embodiments. The following description is made with reference to the accompanying drawings.

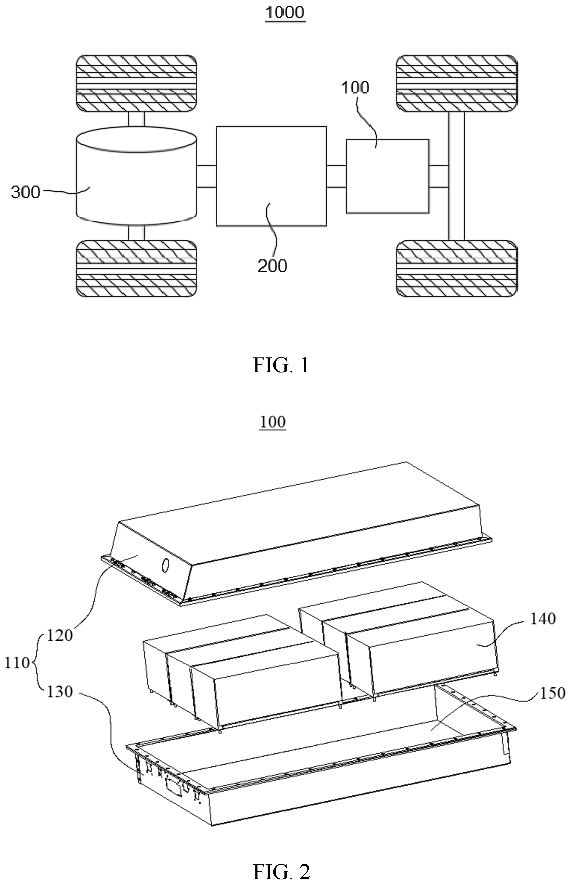

FIG. 1 is a schematic structural diagram of a vehicle 1000 according to some embodiments of the present disclosure. The vehicle 1000 may be a fossil fuel vehicle, a gas vehicle, or a new energy vehicle. The new energy vehicle may be a battery electric vehicle, a hybrid electric vehicle, a range-extended electric vehicle, or the like. As shown in FIG. 1, a battery 100 is disposed inside the vehicle 1000. The battery 100 may be disposed at the bottom, head, or tail of the vehicle 1000. The battery 100 may be configured to supply power to the vehicle 1000. For example, the battery 100 may serve as an operating power source of the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of the present disclosure, the battery 100 can not only serve as an operating power source of the vehicle 1000, but also as a driving power source of the vehicle 1000, replacing or partially replacing fossil fuel or natural gas to provide driving power for the vehicle 1000.

FIG. 2 is a three-dimensional schematic exploded view of a battery according to some embodiments of the present disclosure. As shown in FIG. 2, the battery 100 includes a box 110 and a battery cell (not shown in FIG. 2). The battery cell is accommodated in the box 110.

The box 110 is configured to accommodate the battery cell, and the box 110 may adopt various structures. In some embodiments, the box 110 may include a first box portion 120 and a second box portion 130. The first box portion 120 and the second box portion 130 fit each other, so that the first box portion 120 and the second box portion 130 jointly define an accommodating space 150 for accommodating the battery cell. The second box portion 130 may be a hollow structure with an opening at one end. The first box portion 120 is a plate-like structure. The first box portion 120 covers the opening side of the second box portion 130 to form the box 110 with the accommodating space 150. Alternatively, the first box portion 120 and the second box portion 130 may each be a hollow structure with an opening on one side. The opening side of the first box portion 120 is engaged with the opening side of the second box portion 130 to form the box 110 with the accommodating space 150. Certainly, the first box portion 120 and the second box portion 130 may be of various shapes, such as a cylinder and a cuboid.

To improve the airtightness after the first box portion 120 and the second box portion 130 are connected to each other, a sealing member, such as a sealant or a sealing ring, may also be disposed between the first box portion 120 and the second box portion 130.

Assuming that the first box portion 120 covers a top of the second box portion 130, the first box portion 120 may also be called an upper box cover, and the second box portion 130 may also be called a lower box body.

In the battery 100, one or more battery cells may be provided. When a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety formed by the plurality of battery cells is accommodated in the box 110; or certainly, a plurality of battery cells are connected in series, parallel, or series-parallel first to form a battery module 140, and then a plurality of battery modules 140 are connected in series, parallel, or series-parallel to form an entirety which is accommodated in the box 110.

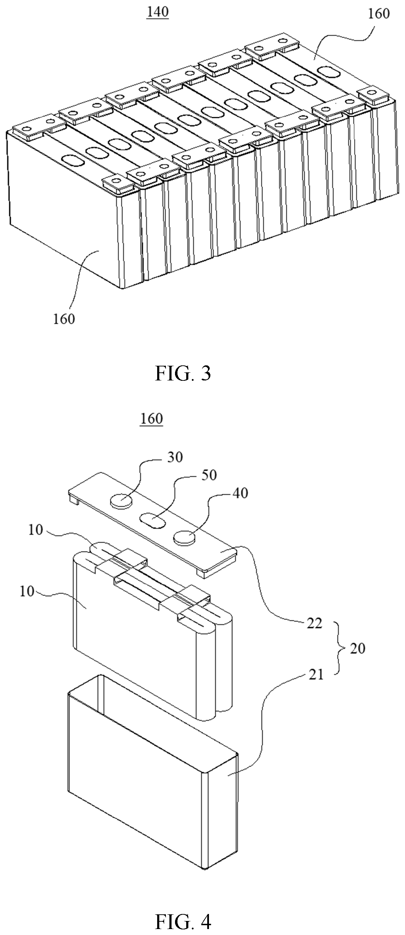

FIG. 3 is a three-dimensional schematic diagram of a battery module according to some embodiments of the present disclosure. As shown in FIG. 3, in some embodiments, a plurality of battery cells 160 are provided, and the plurality of battery cells 160 are connected in series, parallel, or series-parallel first to form a battery module 140, and then a plurality of battery modules 140 are connected in series, parallel, or series-parallel to form an entirety which is accommodated in the box.

The plurality of battery cells 160 in the battery module 140 may be electrically connected to each other through a busbar to achieve parallel, series, or series-parallel connection of the plurality of battery cells 160 in the battery module 140.

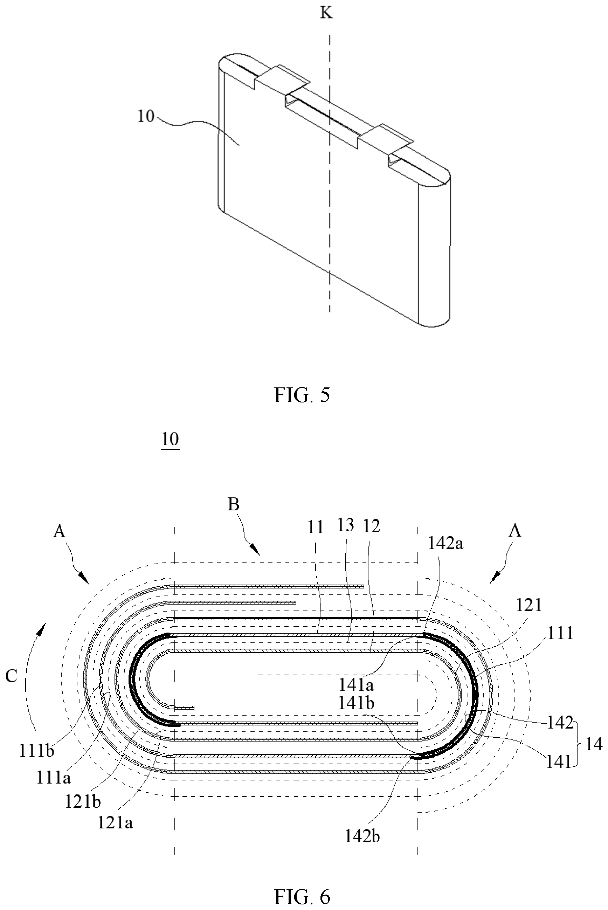

FIG. 4 is a three-dimensional schematic exploded view of a battery cell according to some embodiments of the present disclosure. FIG. 5 is a three-dimensional schematic diagram of an electrode assembly according to some embodiments of the present disclosure. As shown in FIGs. 4 and 5, the battery cell 160 according to the embodiments of the present disclosure includes an electrode assembly 10 and a housing 20, where the electrode assembly 10 is accommodated in the housing 20.

The battery cell 160 may be a secondary battery. The secondary battery refers to a battery cell whose active material can be activated for continuous use through charging after the battery cell is discharged.

The battery cell 160 may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of the present disclosure.

The electrode assembly 10 includes a positive electrode sheet, a negative electrode sheet, and a separator. During the charging and discharging of the battery cell 160, active ions (for example, lithium ions) are intercalated and deintercalated back and forth between the positive electrode sheet and the negative electrode sheet. The separator is disposed between the positive electrode sheet and the negative electrode sheet to prevent short circuit between the positive electrode sheet and the negative electrode sheet and to allow active ions to pass through.

In some embodiments, the electrode assembly is provided with a tab. The tab can lead out current from the electrode assembly. The tab includes a positive electrode tab and a negative electrode tab.

In some embodiments, the housing 20 can also be configured to accommodate an electrolyte, such as a liquid electrolyte. The housing 20 may have various structural forms. The housing may be a steel shell, an aluminum shell, a plastic shell (such as polypropylene), a composite metal shell (such as a copper-aluminum composite shell), an aluminum-plastic film, or the like.

In some embodiments, the housing 20 may include a housing body 21 and an end cover 22. The housing body 21 is a hollow structure with an opening on one side. The end cover 22 covers the opening of the housing body 21 and forms a sealed connection, so as to form a sealed space for accommodating the electrode assembly 10 and the electrolyte.

The housing body 21 may be of various shapes, such as a cylinder and a cuboid. The shape of the housing body 21 can be determined based on a specific shape of the electrode assembly 10. The end cover 22 may adopt various structures. For example, the end cover 22 is a plate-like structure, a hollow structure with an opening at one end. Exemplarily, in FIG. 4, the housing body 21 is a cuboid structure, the end cover 22 is a plate-like structure, and the end cover 22 covers an opening at a top of the housing body 21.

In some embodiments, the battery cell 160 may further include a positive electrode terminal 30, a negative electrode terminal 40, and a pressure relief mechanism 50. The positive electrode terminal 30, the negative electrode terminal 40, and the pressure relief mechanism 50 are all installed on the end cover 22. Both the positive electrode terminal 30 and the negative electrode terminal 40 are configured to be electrically connected to the electrode assembly 10 to output electrical energy generated by the electrode assembly 10. The pressure relief mechanism 50 is configured to relieve pressure inside the battery cell 160 when an internal pressure or temperature of the battery cell 160 reaches a predetermined value.

Exemplarily, the pressure relief mechanism 50 is located between the positive electrode terminal 30 and the negative electrode terminal 40, and the pressure relief mechanism 50 may be components such as an explosion-proof valve, an explosion-proof sheet, a gas valve, a pressure relief valve, or a safety valve.

In some other embodiments, the housing 20 may alternatively be another structure. For example, the housing 20 includes a housing body 21 and two end covers 22. The housing body 21 is a hollow structure with openings on two opposite sides. One end cover 22 correspondingly covers one opening of the housing body 21 and forms a sealed connection to form a sealed space for accommodating the electrode assembly 10 and the electrolyte. In this structure, the positive electrode terminal 30 and the negative electrode terminal 40 may be installed on a same end cover 22, or may be installed on different end covers 22. The pressure relief mechanism 50 may be installed on one end cover 22, or the pressure relief mechanisms 50 may be installed on each of the two end covers 22.

It should be noted that in the battery cell 160, one or more electrode assemblies 10 may be accommodated in the housing 20. Exemplarily, in FIG. 4, two electrode assemblies 10 are provided.

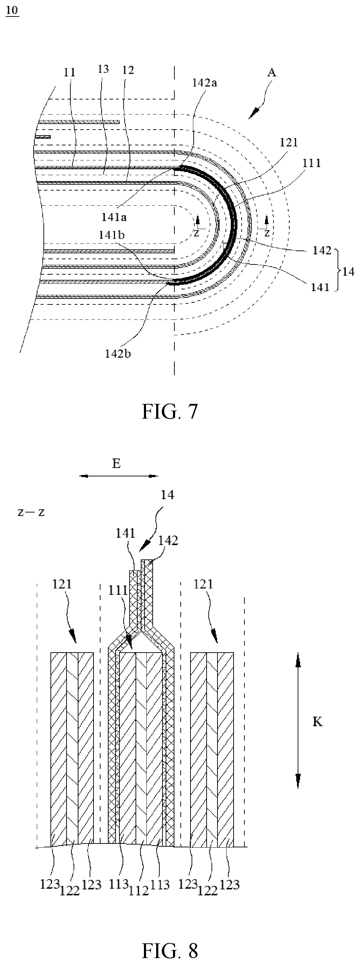

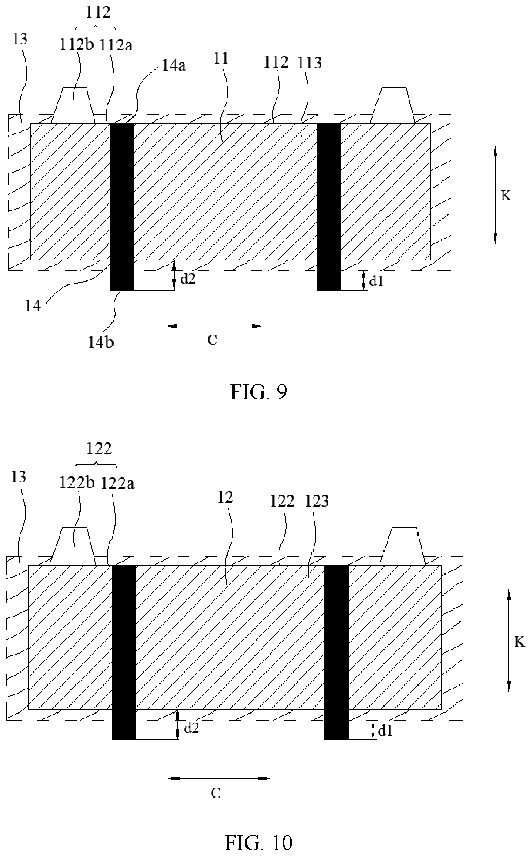

FIG. 5 is a three-dimensional schematic diagram of an electrode assembly according to some embodiments of the present disclosure. FIG. 6 is a schematic cross-sectional view of an electrode assembly according to some embodiments of the present disclosure. FIG. 7 is a partially enlarged view in FIG. 6. FIG. 8 is a schematic cross-sectional view at position z-z in FIG. 7. FIG. 9 is a schematic structural diagram of a positive electrode sheet of an electrode assembly unfolded along a winding direction according to some embodiments of the present disclosure. FIG. 10 is a schematic structural diagram of a negative electrode sheet of an electrode assembly unfolded along a winding direction according to some embodiments of the present disclosure.

As shown in FIGs. 5 to 10, the electrode assembly 10 according to the embodiments of the present disclosure includes a wound structure and a protective layer. The wound structure is formed by winding a laminate including a positive electrode sheet 11 and a negative electrode sheet 12. A separator 13 is sandwiched between the positive electrode sheet 11 and the negative electrode sheet 12. The wound structure includes a bent region A. The positive electrode sheet 11 includes at least one positive electrode bent portion 111 located in the bent region A. The negative electrode sheet 12 includes at least one negative electrode bent portion 121 located in the bent region A. Along a winding axis direction K of the wound structure, two ends of the separator 13 extend beyond the positive electrode bent portion 111 and the negative electrode bent portion 121. The protective layer 14 is attached to a surface of the positive electrode bent portion 111 and/or a surface of the negative electrode bent portion 112. Along the winding axis direction K of the wound structure, at least one end of the protective layer 14 extends beyond the separator 13.

As shown in FIG. 9, the positive electrode sheet 11 includes a positive electrode current collector 112 and a positive electrode active material layer 113. The positive electrode active material layer 113 is applied on a surface of the positive electrode current collector 112. The positive electrode current collector 112 includes a positive electrode current collecting portion 112a and a positive electrode protrusion 112b protruding from the positive electrode current collecting portion 112a. The positive electrode current collecting portion 112a is coated with the positive electrode active material layer 113. At least a portion of the positive electrode protrusion 112b is not coated with the positive electrode active material layer 113. The positive electrode protrusion 112b serves as a positive electrode tab. In the following description, the positive electrode protrusion 112b may be a positive electrode tab 112b. Taking a lithium-ion battery as an example, a material of the positive electrode current collector 112 can be aluminum (aluminum foil). The positive electrode active material layer 113 includes a positive electrode active material. The positive electrode active material may be lithium cobalt oxide, lithium iron phosphate, ternary lithium, lithium manganese oxide, or the like.

As shown in FIG. 10, the negative electrode sheet 12 includes a negative electrode current collector 122 and a negative electrode active material layer 123. The negative electrode active material layer 123 is applied on a surface of the negative electrode current collector 122. The negative electrode current collector 122 includes a negative electrode current collecting portion 122a and a negative electrode protrusion 122b protruding from the negative electrode current collecting portion 122a. The negative electrode current collecting portion 122a is coated with the negative electrode active material layer 123. At least a portion of the negative electrode protrusion 122b is not coated with the negative electrode active material layer 123. The negative electrode protrusion 122b serves as a negative electrode tab. In the following description, the negative electrode protrusion 122b may be a negative electrode tab 122b. Taking a lithium-ion battery as an example, a material of the negative electrode current collector 122 may be copper (copper foil). The negative electrode active material layer 123 includes a negative electrode active material. The negative electrode active material may be carbon (such as graphite carbon), silicon, or the like.

To allow a large current to pass through without any fusing, a plurality of positive electrode tabs 112b are provided and stacked together, and a plurality of negative electrode tabs 122b are provided and stacked together.

As shown in FIGs. 5 to 8, the positive electrode sheet 11 and the negative electrode sheet 12 are stacked to form a laminate. The laminate is wound around a winding axis K for more than two turns to form a wound structure. An extension direction of the winding axis K is perpendicular to a winding direction C and a stacking direction E (see FIG. 8) of the wound structure.

The separator 13 is sandwiched between the positive electrode sheet 11 and the negative electrode sheet 12 adjacent to each other. The separator 13 is configured to isolate the positive electrode sheet 11 and the negative electrode sheet 12 to reduce the risk of short circuit between the positive electrode sheet 11 and the negative electrode sheet 12. Exemplarily, a material of the separator 13 may be PP (polypropylene, polypropylene), PE (polyethylene, polyethylene), or the like.

The positive electrode sheet 11, the negative electrode sheet 12, and the separator 13 may each be a strip-shaped structure. In the embodiments of the present disclosure, the positive electrode sheet 11, the separator 13, the negative electrode sheet 12, and the separator 13 may be stacked in sequence first, and then wound around the winding axis K from inside to outside for more than two turns to form a wound structure. In FIG. 6, the wound structure is wound in a clockwise direction. Certainly, the winding direction may alternatively be a counter-clockwise direction.

The wound structure includes the bent region A. The bent region A is a region where the positive electrode sheet 11 and the negative electrode sheet 12 have bent structures, and is an example of a bent region. In the bent region A, the positive electrode bent portion 111 and the negative electrode bent portion 121 are alternately distributed along the stacking direction E of the wound structure, that is, in the bent region A, the positive electrode bent portion 111 and the negative electrode bent portion 121 are arranged in sequence from an inner side to an outer side in an order of the positive electrode bent portion 111, the negative electrode bent portion 121, the positive electrode bent portion 111, the negative electrode bent portion 121, and so on, where the inner side is closer to the winding axis K than the outer side, and the stacking direction E is a thickness direction of the wound structure. Exemplarily, the positive electrode bent portion 111 located on the innermost side is located outside the negative electrode bent portion 121 located on the innermost side. Exemplarily, the shapes of the positive electrode bent portion 111 and the negative electrode bent portion 121 may be substantially arc-shaped.

As shown in FIGs. 8 to 10, along the winding axis direction K of the wound structure, two ends of the separator 13 extend beyond the positive electrode bent portion 111 and the negative electrode bent portion 121, that is, along the winding axis direction K, the two ends of the separator 13 respectively extend beyond two ends of the positive electrode bent portion 111, and along the winding axis direction K, the two ends of the separator 13 respectively extend beyond two ends of the negative electrode bent portion 121. In other words, along the winding axis K direction, an edge of the positive electrode bent portion 111 and an edge of the negative electrode bent portion 121 each do not extend beyond an end of the separator 13 and have a certain retraction distance. Thus, the separator 13 can fully cover the positive electrode bent portion 111 and the negative electrode bent portion 121, thereby effectively reducing the risk of short circuit between the positive electrode sheet 11 and the negative electrode sheet 12.

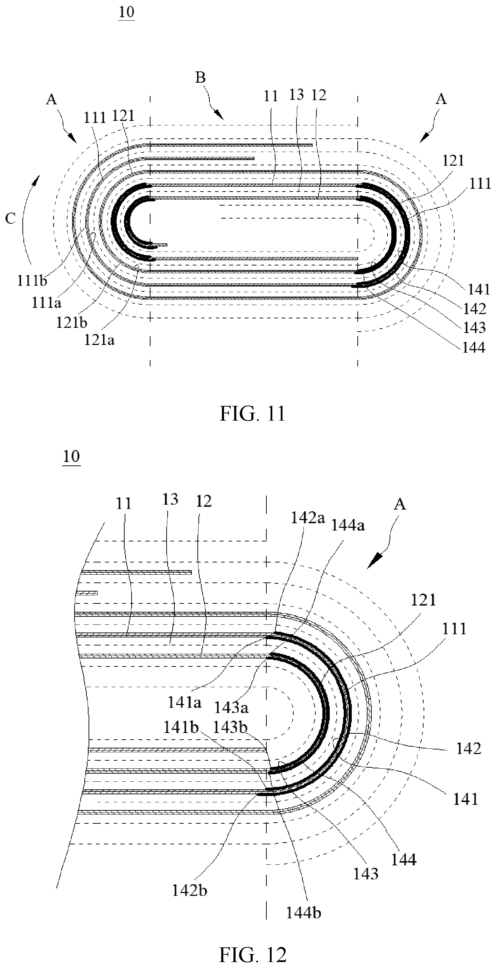

The protective layer 14 is attached to the surface of the positive electrode bent portion 111 and/or the surface of the negative electrode bent portion 112, which may mean that as shown in FIG. 6, the protective layer 14 is attached to the surface of the positive electrode bent portion 111 in the positive electrode bent portion 111 and the negative electrode bent portion 121; or the protective layer 14 is attached to the surface of the negative electrode bent portion 121 in the positive electrode bent portion 111 and the negative electrode bent portion 121; or as shown in FIG. 11, the protective layer 14 is attached to both the surface of the positive electrode bent portion 111 and the surface of the negative electrode bent portion 121. The surface of the positive electrode bent portion 111 may be a surface of the positive electrode active material layer 113 at the positive electrode bent portion 111 in the positive electrode sheet 11. The surface of the negative electrode bent portion 121 may be a surface of the negative electrode active material layer 123 at the negative electrode bent portion 121 in the negative electrode sheet 12.

For example, in some embodiments, the protective layer 14 is attached to the surface of the positive electrode bent portion 111 and/or the surface of the negative electrode bent portion 121 through adhesion or electrostatic adsorption. The protective layer 14 is attached to the surface of the positive electrode bent portion 111 and/or the surface of the negative electrode bent portion 121 through adhesion, which may mean that the protective layer 14 itself has an adhesive layer, so that the protective layer 14 is adhered to the surface of the positive electrode bent portion 111 and/or the surface of the negative electrode bent portion 121 through the adhesive layer. Alternatively, the protective layer 14 is adhered to the surface of the positive electrode bent portion 111 and/or the surface of the negative electrode bent portion 121 by an adhesive, and the adhesive may be glue or an adhesive layer applied on the surface of the positive electrode bent portion 111 and/or the surface of the negative electrode bent portion 121.

Along the winding axis direction K of the wound structure, at least one end of the protective layer 14 extends beyond the separator 13, which may mean that one end of the protective layer 14 extends beyond the separator 13, and the other end of the protective layer 14 may extend beyond the separator 13 or may not extend beyond the separator 13.

The protective layer 14 extending beyond the separator 13 may mean that along the winding axis direction K of the wound structure, an end of the protective layer 14 extends beyond an edge of the separator 13 on the same side as the end of the protective layer 14. The protective layer 14 not extending beyond the separator 13 may mean that along the winding axis direction K of the wound structure, an end of the protective layer 14 is retracted from an edge of the separator 13 on the same side as the end of the protective layer 14, and the retraction position may be located between the edge of the electrode sheet and the edge of the separator 13 on the same side, or may be substantially flush with the edge of the electrode sheet.

The positive electrode bent portion 111 and the negative electrode bent portion 121 generate stress concentration during the bending process and may cause fracture and falling-off of active materials on their respective surfaces, which in turn poses the risk of thermal runaway in the battery. In the embodiments of the present disclosure, the protective layer 14 attached to the positive electrode bent portion 111 and the negative electrode bent portion 121 can reduce the risks of fracture and falling-off of the active material when the positive electrode bent portion 111 and the negative electrode bent portion 121 are bent, thereby reducing the risk of thermal runaway in the electrode assembly, the battery cell, and even the entire battery. The protective layer 14 extending beyond the separator 13 can enable the protective layer to fully cover the positive and negative electrode sheets for reliable protection, and can allow for visual inspection of an attachment position of the protective layer 14 during the manufacturing process (for example, during the winding process) of the battery to timely confirm the accuracy of the attachment position.

In some embodiments, a material of the protective layer 14 may be polyethylene terephthalate, polypropylene, polyethylene, polyimide, or non-woven fabric. In some embodiments, as shown in FIG. 9, at the positive electrode bent portion 111, along the winding axis direction K, a first edge 14a of the protective layer 14 located at the positive electrode bent portion 111 extends beyond the positive electrode active material layer 113 but does not extend beyond the separator 13, a second edge 14b of the protective layer 14 located at the positive electrode bent portion 111 extends beyond the separator 13, where the first edge 14a is located at one end of the protective layer 14 along the winding axis direction K, and the second edge 14b is located at the other end of the protective layer 14 along the winding axis direction K.

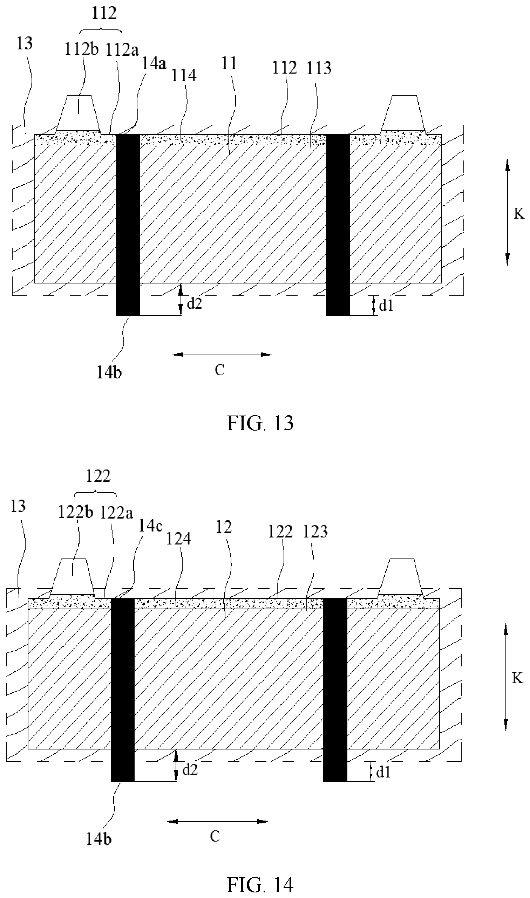

The first edge 14a of the protective layer 14 located at the positive electrode bent portion 111 extending beyond the positive electrode active material layer 113 but not beyond the separator 13 may mean that along the winding axis direction K, the first edge 14a is located between an edge of the positive electrode active material layer 113 and an edge of the separator 13 on a same side. Exemplarily, as shown in FIG. 13, only a partial region of the positive electrode current collecting portion 112a is coated with the positive electrode active material layer 113. A region of the positive electrode current collecting portion 112a not coated with the positive electrode active material layer 112a is coated with an insulating layer 114. The insulating layer 114 is located on a side of the positive electrode active material layer 113 close to the positive electrode protrusion 112b (the positive electrode tab), and is located between the edge of the positive electrode active material layer 113 and the edge of the separator 13 on the same side. The first edge 14a may be located in the insulating layer 114.

When the protective layer 14 is adhered to the surface of the positive electrode bent portion 111 through its adhesive layer, a surface of the protective layer 14 extending beyond the separator 13 has adhesiveness and may be adhered to a roller during the winding process, thus leading to the risk of tearing of the protective layer 14.

In the embodiments of the present disclosure, along the winding axis direction K, the first edge 14a of the protective layer 14 located at the positive electrode bent portion 111 extends beyond the positive electrode active material layer 113 but does not extend beyond the separator 13, and the second edge 14b of the protective layer 14 located at the positive electrode bent portion 111 extends beyond the separator 13. Thus, the protective layer 14 covers the positive electrode active material layer 113 and has only one edge extending beyond the separator 13, so that an adhesion position of the protective layer 14 at the positive electrode bent portion 111 can be visually inspected. Compared with a case where two edges extend beyond the separator 13, the risk of tearing of the separator 13 due to adhesion to the roller is reduced.

In some embodiments, as shown in FIG. 10, at the negative electrode bent portion 121, along the winding axis direction K, a third edge 14c of the protective layer 14 located at the negative electrode bent portion 121 extends beyond the negative electrode active material layer 123 but does not extend beyond the separator 13, and a fourth edge 14d of the protective layer 14 located at the negative electrode bent portion extends beyond the separator. The third edge 14c is located at one end of the protective layer 14 along the winding axis direction K, and the fourth edge 14d is located at the other end of the protective layer 14 along the winding axis direction K.

The third edge 14c of the protective layer 14 located at the negative electrode bent portion 121 extending beyond the negative electrode active material layer 123 but not beyond the separator 13 may mean that along the winding axis direction K, the third edge 14c is located between an edge of the negative electrode active material layer 123 and an edge of the separator 13 on a same side. Exemplarily, as shown in FIG. 14, only a partial region of the negative electrode current collecting portion 122a is coated with the negative electrode active material layer 123. A region of the negative electrode current collecting portion 122a not coated with the negative electrode active material layer 123 is coated with an insulating layer 124. The insulating layer 124 is located on a side of the negative electrode active material layer 123 close to the negative electrode protrusion 122b (the negative electrode tab), and is located between the edge of the negative electrode active material layer 123 and the edge of the separator 13 on the same side. The third edge 14c may be located in the insulating layer 124.

In the embodiments of the present disclosure, along the winding axis direction K, the third edge 14c of the protective layer 14 located at the negative electrode bent portion 121 extends beyond the negative electrode active material layer 123 but does not extend beyond the separator 13, and the fourth edge 14d of the protective layer 14 located at the negative electrode bent portion 121 extends beyond the separator 13. Thus, the protective layer 14 covers the negative electrode active material layer 123 and has only one edge extending beyond the separator 13, so that an adhesion position of the protective layer 14 at the negative electrode bent portion 121 can be visually inspected. Compared with a case where two edges extend beyond the separator 13, the risk of tearing of the separator 13 due to adhesion to the roller is reduced.

In some embodiments, along the winding axis direction K, the protective layer 14 extends beyond the separator 13 by a length d1 of 1 mm to 4 mm. This means that the protective layer 14 at the positive electrode bent portion 111 extends beyond the separator 13 by the length d1 of 1 mm to 4 mm, or the protective layer 14 at the negative electrode bent portion 121 extends beyond the separator 13 by the length d1 of 1 mm to 4 mm.

The length d1 may be 1 mm, 2 mm, 3 mm, or 4 mm.

If the length d1 by which the protective layer 14 extends beyond the separator 13 is excessively small, visual inspection is difficult. If the length d1 by which the protective layer 14 extends beyond the separator 13 is excessively large, the risk of tearing of the protective layer 14 due to adhesion to the roller during the winding process is higher. Therefore, in the embodiments of the present disclosure, controlling the length d1 by which the protective layer 14 extends beyond the separator 13 to be 1 mm to 4 mm can facilitate visual inspection of an adhesion position of the protective layer 14 and reduce the risk of tearing of the protective layer 14 due to adhesion to the roller.

In some embodiments, along the winding axis direction K, the protective layer 14 located at the positive electrode bent portion 111 extends beyond the positive electrode bent portion 111 by a length d2 of 4 mm to 6 mm; and/or along the winding axis direction K, the protective layer 14 located at the negative electrode bent portion 121 extends beyond the negative electrode bent portion 121 by a length d2 of 4 mm to 6 mm.

The length d2 includes a length by which the separator 13 extends beyond an edge of the electrode sheet and a length by which the protective layer 14 extends beyond the separator 13.

During the preparation process of the electrode assembly, the protective layer 14 may be first attached to the electrode sheet, and then wound. In the wound structure formed after winding, the edge of the electrode sheet is flatter than the edge of the separator, making it easier to measure an extension dimension of the protective layer 14. Moreover, after the protective layer 14 is attached to the electrode sheet and before winding, a dimension by which the protective layer 14 extends beyond the electrode sheet can also be conveniently measured. Therefore, the length by which the protective layer 14 extends beyond the positive electrode bent portion 111 and/or the negative electrode bent portion 121 is controlled to control the extension length by which the protective layer 14 extends beyond the separator 13, so that the attachment accuracy of the protective layer 14 can be improved.

In some embodiments, a positive electrode tab 112b is disposed on a side of the positive electrode current collector 112a along the winding axis direction K, and the first edge 14a of the protective layer 14 is located on the same side as the positive electrode tab 112b along the winding axis direction K. That is, the first edge 14a on the same side as the positive electrode tab 112b does not extend beyond the separator 13.

In some embodiments, a negative electrode tab 122b is disposed on a side of the negative electrode current collector 122a along the winding axis direction K, and the third edge 14c of the protective layer 14 is located on the same side as the negative electrode tab 122b along the winding axis direction K. That is, the third edge 14a on the same side as the negative electrode tab 122b does not extend beyond the separator 13.

During the winding process, a detection device is typically disposed on a side of the tab (the positive electrode tab 112b or the negative electrode tab 122b). For example, the detection device may be a sensor configured to detect the tab. The sensor is configured to detect whether the tab is bent. If the tab is bent, the tab is considered to be unqualified. If the edges of the protective layer 14 (the first edge 14a and the third edge 14c) on the same side as the tab extend beyond the separator 13, when an extension portion of the protective layer 14 passes through the sensor, a false alarm may be given by the sensor, that is, a qualified positive electrode tab is mistakenly considered to be unqualified. Thus, in the embodiments of the present disclosure, the edge of the protective layer 14 on the same side as the tab does not extend beyond the separator 13, so that the risk of false alarms from the detection device on the side of the tab can be avoided.

In some embodiments, as shown in FIGs. 8 and 11, the protective layer 14 can cover a positive electrode active material layer 113 on one surface (a first concave surface 111a or a first convex surface 111b) or positive electrode active material layers 113 on two surfaces (the first concave surface 111a and the first convex surface 111b) of the positive electrode bent portion 111 in the positive electrode sheet 11. Moreover, the protective layer 14 can also cover a negative electrode active material layer 123 on one surface (a second concave surface 121a or a second convex surface 121b) or negative electrode active material layers 123 on two surfaces (the second concave surface 121a and the second convex surface 121b) of the negative electrode bent portion 121 in the negative electrode sheet 12.

FIG. 11 is a schematic cross-sectional view of an electrode assembly according to some other embodiments of the present disclosure. FIG. 12 is a partially enlarged view in FIG. 11.

As shown in FIGs. 11 and 12, in some embodiments, along a stacking direction E of the wound structure, each positive electrode bent portion 111 includes a first concave surface 111a and a first convex surface 111b located on two opposite sides. The protective layer 14 includes a first protective layer 141 and a second protective layer 142 respectively attached to the first concave surface 111a and the first convex surface 111b.

The stacking direction E of the wound structure may be a thickness direction of the positive electrode bent portion 111. A plurality of positive electrode bent portions 111 may be arranged along the stacking direction E. Each positive electrode bent portion 111 includes a first concave surface 111a and a first convex surface 111b located on two opposite sides. The first concave surface 111a is a surface where an arc of the positive electrode bent portion 111 is recessed inwards. The first convex surface 111b is a surface where the arc of the positive electrode bent portion 111 protrudes outwards. The first concave surface 111a is closer to the winding axis than the first convex surface 111b.

During the bending process of the positive electrode bent portion 111, the active material layers on surfaces of front and back sides of the positive electrode bent portion 111 may fall off, which may affect the capacity of the battery and may also cause the risk of thermal runaway in the battery. In the embodiments of the present disclosure, the protective layers 14 are attached to both the first concave surface 111a and the first convex surface 111b on the front and back sides of the positive electrode bent portion 111, so that the risk of fracture of the positive electrode bent portion 111 can be further reduced, and the risk of falling-off of positive electrode active material layers on two surfaces of the positive electrode bent portion 111 can be reduced, thereby reducing adverse effects on the capacity of the battery and reducing the risk of thermal runaway in the battery.

In some embodiments, the first protective layer 141 and the second protective layer 142 may be respectively attached to the first concave surface 111a and the first convex surface 111b of each positive electrode bent portion 111. In this way, a plurality of positive electrode bent portions 111 can be fully protected.

Since the positive electrode bent portion 111 located on the innermost side in the stacking direction E is subjected to a greater tensile force compared to other positive electrode bent portions 111, the fracture or the falling-off of the positive electrode active material layer is more easily caused. Thus, in some embodiments, the first protective layer 141 and the second protective layer 142 may also be respectively attached to the first concave surface 111a and the first convex surface 111b of the positive electrode bent portion 111 located on the innermost side in the stacking direction E. In this way, the positive electrode bent portion 111 located on the innermost side is effectively protected.

In some embodiments, as shown in FIG. 8, along the winding axis direction K, one of the first protective layer 141 and the second protective layer 142 extends beyond the other on at least one end. That is, along the winding axis direction K, ends on the same side of the first protective layer 141 and the second protective layer 142 are staggered from each other (offset from each other).

For example, along the winding axis direction K, ends of the first protective layer 141 on the same side may extend beyond an end of the second protective layer 142; or along the winding axis direction K, ends of the second protective layer 142 on the same side may extend beyond an end of the first protective layer 141. Alternatively, along the winding axis direction K, two ends of the first protective layer 141 may respectively extend beyond two ends of the second protective layer 142 on the same side. Alternatively, along the winding axis direction K, two ends of the second protective layer 142 may respectively extend beyond two ends of the first protective layer 141 on the same side.

An extension dimension by which one of the first protective layer 141 and the second protective layer 142 extends beyond the other may be 0 mm to 4 mm. Exemplarily, the extension dimension may be 0 mm, 1 mm, 2 mm, 3 mm, or 4 mm.

In some embodiments, along the stacking direction E of the wound structure, each negative electrode bent portion 121 includes a second concave surface 121a and a second convex surface 121b located on two opposite sides. The protective layer 14 includes a third protective layer 143 and a fourth protective layer 144 respectively attached to the second concave surface 121a and the second convex surface 121b.

A plurality of negative electrode bent portions 121 may be arranged along the stacking direction E. The plurality of negative electrode bent portions 121 and a plurality of positive electrode bent portions 111 are alternately distributed along the stacking direction E. Each negative electrode bent portion 121 includes a second concave surface 121a and a second convex surface 121b located on two opposite sides. The second concave surface 121a is a surface where an arc of the negative electrode bent portion 121 is recessed inwards. The second convex surface 121b is a surface where the arc of the negative electrode bent portion 121 protrudes outwards. The second concave surface 121a is closer to the winding axis than the second convex surface 121b.

During the bending process of the negative electrode bent portion 121, the active material layers on surfaces of front and back sides of the negative electrode bent portion 121 may fall off, which may affect the capacity of the battery and may also cause the risk of thermal runaway in the battery. In the embodiments of the present disclosure, the protective layers 14 are attached to both the second concave surface 121a and the second convex surface 121b on the front and back sides of the negative electrode bent portion 121, so that the risk of fracture of the negative electrode bent portion 121 can be further reduced, and the risk of falling-off of negative electrode active material layers on two surfaces of the negative electrode bent portion 121 can be reduced, thereby reducing adverse effects on the capacity of the battery and reducing the risk of thermal runaway in the battery.

In some embodiments, the third protective layer 143 and the fourth protective layer 144 may be respectively attached to the second concave surface 121a and the second convex surface 121b of each negative electrode bent portion 121. In this way, the plurality of negative electrode bent portions 121 can be fully protected.

Since the negative electrode bent portion 121 located on the innermost side in the stacking direction E is subjected to a greater tensile force compared to other negative electrode bent portions 121, the fracture or falling-off of the positive electrode active material layer is more easily caused.

In some embodiments, the third protective layer 143 and the fourth protective layer 144 may alternatively be respectively attached to the second concave surface 121a and the second convex surface 121b of the negative electrode bent portion 121 located on the innermost side in the stacking direction E. In this way, the negative electrode bent portion 121 located on the innermost side is effectively protected.

In some embodiments, as shown in FIGs. 11 and 12, the first protective layer 141 includes a first end 141a and a second end 141b along a winding direction C of the wound structure. The second protective layer 142 includes a third end 142a and a fourth end 142b in the winding direction C. The third end 142a and the first end 141a are located on a same side along the winding direction C and staggered from each other along the winding direction C, and/or the fourth end 142b and the second end 141b are located on a same side along the winding direction C and staggered from each other along the winding direction C.

The third end 142a and the first end 141a being staggered from each other along the winding direction C means that the third end 142a and the first end 141a are not located at a same position along the winding direction C. For example, as shown in FIG. 12, along the winding direction C, the third end 142a extends beyond the first end 141a. In other words, the first end 141a extends along a counter-clockwise direction relative to the third end 142a. Certainly, the first end 141a may also extend beyond the third end 142a.

The fourth end 142b and the second end 141b being staggered from each other along the winding direction C means that the fourth end 142b and the second end 141b are not located at a same position along the winding direction C. For example, as shown in FIG. 12, along the winding direction C, the fourth end 142b extends beyond the second end 141b. In other words, the fourth end 142b extends along a clockwise direction relative to the second end 141b. Certainly, the second end 141b may also extend beyond the fourth end 142b.

The first protective layer 141 and the second protective layer 142 may have ends on a same side along the winding direction C that are staggered from each other. Alternatively, as shown in FIG. 12, two ends on the same side of the first protective layer 141 and the second protective layer 142 along the winding direction C may be staggered from each other. For example, the third end 142a and the first end 141a are staggered from each other, and the fourth end 142b and the second end 141b are not staggered from each other. Alternatively, the fourth end 142b and the second end 141b are staggered from each other, and the third end 142a and the first end 141a are not staggered from each other. Alternatively, the third end 142a and the first end 141a are staggered from each other, and the fourth end 142b and the second end 141b are also staggered from each other.

Since the first protective layer 141 and the second protective layer 142 each have a certain thickness, along the winding direction C, an end of the first protective layer 141 and an end of the second protective layer 142 respectively form steps with the surface of the positive electrode sheet 11. During an extrusion molding process of the wound structure, a greater step height difference leads to more obvious extrusion of the separator 13, which easily leads to wrinkles in the separator 13, thereby blocking pores in the separator 13, and even posing the risk of puncture of the separator. In the embodiments of the present disclosure, the two ends on the same side of the first protective layer 141 and the second protective layer 142 are staggered from each other, so that compared to a case where the two ends on the same side of the first protective layer 141 and the second protective layer 142 are not staggered from each other, step heights of ends after stacking of the protective layers can be reduced. Therefore, during the extrusion molding process of the wound structure, buffering can be formed for the extrusion of the separator 13, reducing the risk of wrinkles in the separator 13, thereby reducing the possibility that pores of the separator 13 are blocked due to the wrinkles.

In some embodiments, the third protective layer 143 includes a fifth end 143a and a sixth end 143b in a winding direction C of the wound structure. The fourth protective layer 144 includes a seventh end 144a and an eighth end 144b in the winding direction C. The seventh end 144a and the fifth end 143a are located on a same side in the winding direction C and staggered from each other along the winding direction C; and/or the eighth end 144b and the sixth end 143b are located on a same side in the winding direction C and staggered from each other along the winding direction C.

The third protective layer 143 and the fourth protective layer 144 may have ends on a same side along the winding direction C that are staggered from each other. Alternatively, two ends of the third protective layer 143 and the fourth protective layer 144 on a side along the winding direction C may be staggered from each other. For example, the seventh end 144a and the fifth end 143a are staggered from each other, and the eighth end 144b and the sixth end 143b are not staggered from each other. Alternatively, the eighth end 144b and the sixth end 143b are staggered from each other, and the seventh end 144a and the fifth end 143a are not staggered from each other. Alternatively, the seventh end 144a and the fifth end 143a are staggered from each other, and the eighth end 144b and the sixth end 143b are also staggered from each other.

In the embodiments of the present disclosure, the two ends on the same side of the third protective layer 141 and the fourth protective layer 142 are staggered from each other, so that compared to a case where the two ends on the same side of the third protective layer 141 and the fourth protective layer 142 are not staggered from each other, step heights of ends after stacking of the protective layers can be reduced. Therefore, during the extrusion molding process of the wound structure, buffering can be formed for the extrusion of the separator 13, reducing the risk of wrinkles in the separator 13, thereby reducing the possibility that the pores of the separator 13 are blocked due to the wrinkles.

In some embodiments, a staggered length between the third end 142a and the first end 141a along the winding direction C is greater than zero and less than or equal to 2 mm; and/or a staggered length between the fourth end 142b and the second end 141b along the winding direction C is greater than zero and less than or equal to 2 mm.

Exemplarily, the staggered length may be 0.5 mm, 1 mm, 1.5 mm, 1.8 mm, or 2 mm.

In some embodiments, a staggered length between the seventh end 144a and the fifth end 143a along the winding direction C is greater than zero and less than or equal to 2 mm; and/or a staggered length between the eighth end 144b and the sixth end 143b along the winding direction C is greater than zero and less than or equal to 2 mm.

Exemplarily, the staggered length may be 0.5 mm, 1 mm, 1.5 mm, 1.8 mm, or 2 mm.

In an example where the two ends on the same side of the first protective layer 141 and the second protective layer 142 along the winding direction C are staggered from each other, if a staggered length of the two ends on the same side of the first protective layer 141 and the second protective layer 142 along the winding direction C is excessively small, the risk of wrinkles of the separator 13 due to extrusion is caused. If the staggered length of the two ends on the same side of the first protective layer 141 and the second protective layer 142 along the winding direction C is excessively large, a large staggered distance is present between a portion of the first protective layer 141 extending beyond the separator 13 and a portion of the second protective layer 142 extending beyond the separator 13, resulting in large adhesive exposure areas on surfaces of the portions of the first protective layer 141 and the second protective layer 142 extending beyond the separator 13, and easily leading to the risk of tearing due to adhesion to the roller during the winding process. Therefore, controlling the staggered length of the two ends on the same side of the first protective layer 141 and the second protective layer 142 along the winding direction C within a range greater than zero and less than or equal to 2 mm can reduce both the risk of wrinkles in the separator 13 and the risk of tearing due to adhesion to the roller.

In some embodiments, as shown in FIGs. 6 and 7, the wound structure includes a straight region B connected to the bent region A. At least one end of the protective layer 14 in the winding direction C of the wound structure extends to a boundary between the straight region B and the bent region A or extends beyond the boundary to the straight region B along the winding direction C.

Only one end of the protective layer 14 in the winding direction C of the wound structure extends to the boundary between the straight region B and the bent region A or extends beyond the boundary to the straight region B along the winding direction C; or two ends of the protective layer 14 in the winding direction C of the wound structure extend to the boundary between the straight region B and the bent region A or extend beyond the boundary to the straight region B along the winding direction C. Thus, the protective layer 14 located at the positive electrode bent portion 111 can cover the positive electrode active material layer 113 in the winding direction C, so that the positive electrode active material layer 113 is fully protected. The protective layer 14 located at the negative electrode bent portion 121 can cover the negative electrode active material layer 123 in the winding direction C, so that the negative electrode active material layer 123 is fully protected.

In some embodiments, at least one of the first protective layer 141 on the first concave surface 11a and the second protective layer 142 on the first convex surface 111b is provided with pores for ions to pass through.

Only at least a portion of the first protective layer 141 on the first concave surface 11a of the positive electrode bent portion 111 may be provided with pores for ions to pass through. Alternatively, only at least a portion of the second protective layer 142 on the first convex surface 111b of the positive electrode bent portion 111 may be provided with pores for ions to pass through. Alternatively, at least a portion of the first protective layer 141 on the first concave surface 11a of the positive electrode bent portion 111 and at least a portion of the second protective layer 142 on the first convex surface 111b of the positive electrode bent portion 111 may each be provided with pores for ions to pass through.

The ions may be active ions in the active material. For example, when the battery is a lithium-ion battery, the active ions are lithium ions; when the battery is a sodium-ion battery, the active ions may be sodium ions; when the battery is a magnesium-ion battery, the active ions may be magnesium ions; and certainly, the ions may alternatively be other possible active ions present in the active material.

The protective layer is provided with pores for ions to pass through, reducing or preventing loss of the capacity of the battery.

The first protective layer 141 on the first concave surface 11a and the second protective layer 142 on the first convex surface 111b are provided with the pores for ions to pass through. This can reduce the risks of fracture of the positive electrode bent portion 111 and falling-off of respective active materials, and also reduce the influence of the protective layer attached to the positive electrode bent portion 111 on the release of a positive electrode active material from the positive electrode active material layer 113 at the positive electrode bent portion 111.

In some embodiments, the first protective layer 141 on the first concave surface 11a and the second protective layer 142 on the first convex surface 111b each include a blocking portion for blocking ions.

Since lithium intercalation sites in the negative electrode active material layer of the negative electrode bent portion 121 are less than lithium ions that can be provided by the positive electrode active material layer of the positive electrode bent portion 111 adjacent thereto, lithium precipitation may occur. In the embodiments of the present disclosure, through the blocking portion for blocking ions on the first protective layer 141, some of lithium ions provided by the positive electrode active material layer can be blocked, thereby reducing lithium precipitation.

In some embodiments, the third protective layer 143 on the second concave surface 121a and the fourth protective layer 144 on the second convex surface 121b are each provided with pores for ions to pass through.

Since lithium intercalation sites in the negative electrode active material layer of the negative electrode bent portion 121 are less than lithium ions that can be provided by the positive electrode active material layer of the positive electrode bent portion 111 adjacent thereto, in other words, the lithium ions that can be provided by the positive electrode active material layer of the positive electrode bent portion 111 are more than the lithium intercalation sites in the negative electrode active material layer of the negative electrode bent portion 121. If the negative electrode active material layer of the negative electrode bent portion 121 is blocked, it is more likely to cause insufficient lithium intercalation sites in the negative electrode active material layer, thus making lithium precipitation more likely to occur. Therefore, the third protective layer 143 on the second concave surface 121a and the fourth protective layer 144 on the second convex surface 121b of the negative electrode bent portion 121 are each provided with the pores for ions to pass through, so that the negative electrode bent portion 121 can be protected, and lithium precipitation can also be reduced.

The protective layer provided with pores for ions to pass through has an air permeability of 220±70 sec/100 cc (sec is measured in second, and cc is measured in cubic centimeter). Regarding the test of the air permeability, for example, the air permeability can be tested according to the standard document GB/T36363-2018, that is, in an environment under test temperature and humidity as well as normal pressure, the time required for 100 ml of air to pass through a separator with an area of 6.45 cm² under a pressure of 1.21 kPa applied by the test instrument is tested. The applied pressure of 1.21 kPa is a constant pressure, and the passed area of 6.45 cm² is a fixed area.

A minimum size range of the pores for ions to pass through in the protective layer may be 100 nm to 400 nm. Exemplarily, the minimum size range of the pores may be 100 nm, 120 nm, 150 nm, 200 nm, 210 nm, 220 nm, 250 nm, 270 nm, 300 nm, 310 nm, 320 nm, 330 nm, 340 nm, 350 nm, 360 nm, 370 nm, 380 nm, 390 nm, or 400 nm. A scanning electron microscope can be used to measure the minimum size of the pores.

An embodiment of the present disclosure further provides a battery cell 160, including: a housing body 20 and at least one electrode assembly 10 mentioned above, where the electrode assembly 10 is accommodated in the housing body 20.

An embodiment of the present disclosure further provides a battery 100, including: a box 110 and at least one battery cell 160 mentioned above, where the battery cell 160 is accommodated in the box 110.

An embodiment of the present disclosure further provides an electric apparatus, where the electric apparatus includes at least one battery cell 160 mentioned above or battery 100 configured to supply electrical energy.

An embodiment of the present disclosure further provides an energy storage apparatus, including the battery mentioned above, where the battery is capable of storing electrical energy and supplying electrical energy.

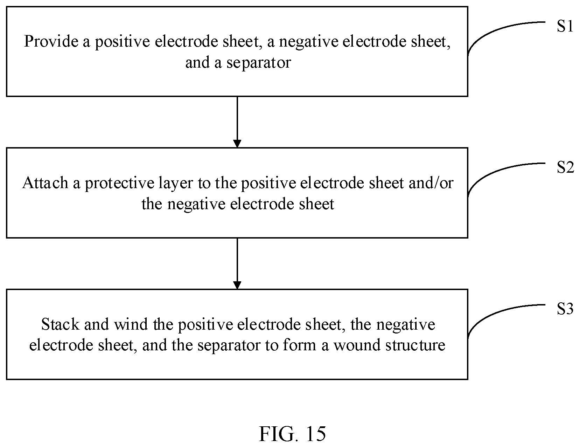

An embodiment of the present disclosure further provides a preparation method of an electrode assembly, as shown in FIG. 15, including the following steps.

Step S1: Provide a positive electrode sheet, a negative electrode sheet, and a separator.

Step S2: Attach a protective layer to the positive electrode sheet and/or the negative electrode sheet.

Step S3: Stack and wind the positive electrode sheet, the negative electrode sheet, and the separator to form a wound structure, where in the wound structure, the separator is sandwiched between the positive electrode sheet and the negative electrode sheet. The wound structure includes a bent region. The positive electrode sheet includes at least one positive electrode bent portion located in the bent region. The negative electrode sheet includes at least one negative electrode bent portion located in the bent region. Along a winding axis direction of the wound structure, two ends of the separator extend beyond the positive electrode bent portion and the negative electrode bent portion. The protective layer is adhered to a surface of the positive electrode bent portion and/or a surface of the negative electrode bent portion. Along the winding axis direction of the wound structure, at least one end of the protective layer extends beyond the separator.

In the embodiments of the present disclosure, the protective layer may be first attached to the positive electrode sheet and/or the negative electrode sheet, and then the winding process is performed. The attachment of the protective layer to the positive electrode sheet and/or the negative electrode sheet may be performed during an electrode sheet die-cutting process, and then the winding process is performed. The attachment of the protective layer to the positive electrode sheet and/or the negative electrode sheet may alternatively be performed by winding and attaching the protective layer at the same time. For example, an adhesion module is integrated in a winding device. The protective layer is adhered to the positive electrode sheet and/or the negative electrode sheet during a winding process of the winding device.

The above embodiments are merely intended for describing the technical solutions of the present disclosure but not for limiting the present disclosure. Although the present disclosure is described in detail with reference to the foregoing embodiments, those of ordinary skill in the art should understand that they may still make modifications to the technical solutions described in the foregoing embodiments or make equivalent replacements to some or all technical features thereof. All such modifications or replacements do not make the essence of the corresponding technical solutions depart from the scope of the technical solutions of the embodiments of the present disclosure, and shall fall within the scope of the claims and specification of the present disclosure. In particular, as long as there is no structural conflict, various technical features mentioned in the embodiments can be combined in any manner. The present disclosure is not limited to the specific embodiments disclosed herein, but includes all technical solutions falling within the scope of the claims.

### INDUSTRIAL APPLICABILITY

The present disclosure provides an electrode assembly and a preparation method thereof, a battery cell, a battery, an electric apparatus, and an energy storage apparatus, which can reduce the risk of thermal runaway. A protective layer is attached to a positive electrode bent portion and a negative electrode bent portion, so that the risks of fracture and falling-off of an active material when the positive electrode bent portion and the negative electrode bent portion are bent can be reduced, thereby reducing the risk of thermal runaway in the electrode assembly, the battery cell, and even the entire battery. The protective layer extends beyond a separator, so that an adhesive tape can fully cover positive and negative electrode sheets for reliable protection, and an attachment position of the protective layer can be visually inspected through an exposed portion during a manufacturing process of the battery to timely confirm the accuracy of the attachment position.

## Claims

1. An electrode assembly, comprising:
a wound structure, wherein the wound structure is formed by winding a laminate comprising a positive electrode sheet and a negative electrode sheet, a separator is sandwiched between the positive electrode sheet and the negative electrode sheet, the wound structure comprises a bent region, the positive electrode sheet comprises at least one positive electrode bent portion located in the bent region, the negative electrode sheet comprises at least one negative electrode bent portion located in the bent region, and along a winding axis direction of the wound structure, two ends of the separator extend beyond the positive electrode bent portion and the negative electrode bent portion; and
a protective layer attached to a surface of the positive electrode bent portion and/or a surface of the negative electrode bent portion, wherein along the winding axis direction of the wound structure, at least one end of the protective layer extends beyond the separator.

2. The electrode assembly according to claim 1, wherein
the protective layer is attached to the surface of the positive electrode bent portion and/or the surface of the negative electrode bent portion through adhesion or electrostatic adsorption.

3. The electrode assembly according to claim 1 or 2, wherein
along a stacking direction of the wound structure, each positive electrode bent portion comprises a first concave surface and a first convex surface located on two opposite sides; and
the protective layer comprises a first protective layer and a second protective layer respectively attached to the first concave surface and the first convex surface.

4. The electrode assembly according to any one of claims 1 to 3, wherein
along a stacking direction of the wound structure, each negative electrode bent portion comprises a second concave surface and a second convex surface located on two opposite sides; and
the protective layer comprises a third protective layer and a fourth protective layer respectively attached to the second concave surface and the second convex surface.

5. The electrode assembly according to any one of claims 1 to 4, wherein
the positive electrode sheet comprises a positive electrode current collector and a positive electrode active material layer disposed on a surface of the positive electrode current collector, and the protective layer covers the positive electrode active material layer at the positive electrode bent portion in the positive electrode sheet; and/or
the negative electrode sheet comprises a negative electrode current collector and a negative electrode active material layer disposed on a surface of the negative electrode current collector, and the protective layer covers the negative electrode active material layer at the negative electrode bent portion in the negative electrode sheet.

6. The electrode assembly according to claim 5, wherein
at the positive electrode bent portion, along the winding axis direction, a first edge of the protective layer located at the positive electrode bent portion extends beyond the positive electrode active material layer but does not extend beyond the separator, and a second edge of the protective layer located at the positive electrode bent portion extends beyond the separator, wherein the first edge is located at one end of the protective layer along the winding axis direction, and the second edge is located at the other end of the protective layer along the winding axis direction; and/or
at the negative electrode bent portion, along the winding axis direction, a third edge of the protective layer located at the negative electrode bent portion extends beyond the negative electrode active material layer but does not extend beyond the separator, and a fourth edge of the protective layer located at the negative electrode bent portion extends beyond the separator, wherein the third edge is located at one end of the protective layer along the winding axis direction, and the fourth edge is located at the other end of the protective layer along the winding axis direction.

7. The electrode assembly according to claim 6, wherein
at the positive electrode current collector, a positive electrode tab is disposed on a side along the winding axis direction, and the first edge of the protective layer is located on the same side as the positive electrode tab along the winding axis direction; and/or
at the negative electrode current collector, a negative electrode tab is disposed on a side along the winding axis direction, and the third edge of the protective layer is located on the same side as the negative electrode tab along the winding axis direction.

8. The electrode assembly according to any one of claims 1 to 7, wherein
along the winding axis direction, the protective layer extends beyond the positive electrode bent portion by a length of 4 mm to 6 mm; and/or
along the winding axis direction, the protective layer extends beyond the negative electrode bent portion by a length of 4 mm to 6 mm.

9. The electrode assembly according to any one of claims 1 to 8, wherein
along the winding axis direction, the protective layer extends beyond the separator by a length of 1 mm to 4 mm.

10. The electrode assembly according to claim 3, wherein
along the winding axis direction, one of the first protective layer and the second protective layer extends beyond the other on at least one end.

11. The electrode assembly according to claim 3, wherein
the first protective layer comprises a first end and a second end located at two ends along a winding direction of the wound structure, and the second protective layer comprises a third end and a fourth end located at two ends along the winding direction; and
the third end and the first end are located on a same side along the winding direction and staggered from each other along the winding direction, and/or the fourth end and the second end are located on a same side in the winding direction and staggered from each other along the winding direction.

12. The electrode assembly according to claim 11, wherein
a staggered length between the third end and the first end along the winding direction is greater than zero and less than or equal to 2 mm; and/or
a staggered length between the fourth end and the second end along the winding direction is greater than zero and less than or equal to 2 mm.

13. The electrode assembly according to claim 4, wherein
the third protective layer comprises a fifth end and a sixth end located at two ends along a winding direction of the wound structure, and the fourth protective layer comprises a seventh end and an eighth end located at two ends along the winding direction; and
the seventh end and the fifth end are located on a same side in the winding direction and staggered from each other along the winding direction, and/or the eighth end and the sixth end are located on a same side in the winding direction and staggered from each other along the winding direction.

14. The electrode assembly according to claim 13, wherein
a staggered length between the seventh end and the fifth end along the winding direction is greater than zero and less than or equal to 2 mm; and/or
a staggered length between the eighth end and the sixth end along the winding direction is greater than zero and less than or equal to 2 mm.

15. The electrode assembly according to any one of claims 1 to 14, wherein
the wound structure comprises a straight region connected to the bent region; and
at least one end of the protective layer in the winding direction of the wound structure extends to a boundary between the straight region and the bent region or extends beyond the boundary to the straight region along the winding direction.

16. The electrode assembly according to any one of claims 1 to 15, wherein
the positive electrode sheet comprises a plurality of positive electrode bent portions located in the bent region and arranged along a stacking direction of the wound structure, and the protective layer is adhered to at least the positive electrode bent portion located on an innermost side along the stacking direction; and/or
the negative electrode sheet comprises a plurality of negative electrode bent portions located in the bent region and arranged along the stacking direction of the wound structure, and the protective layer is adhered to at least the negative electrode bent portion located on the innermost side along the stacking direction.

17. The electrode assembly according to any one of claims 1 to 16, wherein
a material of the protective layer is polyethylene terephthalate, polypropylene, polyethylene, polyimide, or non-woven fabric.

18. The electrode assembly according to claim 3, wherein
at least one of the first protective layer on the first concave surface and the second protective layer on the first convex surface is provided with pores for ions to pass through; or
the first protective layer on the first concave surface and the second protective layer on the first convex surface each comprise a blocking portion for blocking ions.

19. The electrode assembly according to claim 4, wherein
the third protective layer on the second concave surface and the fourth protective layer on the second convex surface are each provided with pores for ions to pass through.

20. The electrode assembly according to claim 18 or 19, wherein
the protective layer provided with pores for ions to pass through has an air permeability of 220±70 sec/100 cc.

21. The electrode assembly according to claim 18 or 19, wherein
a pore size of the pores is 100 nm to 400 nm.

22. A battery cell, comprising: a housing body and at least one electrode assembly according to any one of claims 1 to 21, wherein the electrode assembly is accommodated in the housing body.

23. A battery, comprising: a box and at least one battery cell according to claim 22, wherein the battery cell is accommodated in the box.

24. An electric apparatus, wherein the electric apparatus comprises at least one battery cell according to claim 22 or battery according to claim 23 configured to supply electrical energy.

25. An energy storage apparatus, comprising the battery according to claim 23, wherein the battery is capable of storing electrical energy and supplying electrical energy.

26. A preparation method of an electrode assembly, comprising:
providing a positive electrode sheet, a negative electrode sheet, and a separator;
attaching a protective layer to the positive electrode sheet and/or the negative electrode sheet; and
stacking and winding the positive electrode sheet, the negative electrode sheet, and the separator to form a wound structure, wherein
in the wound structure, the separator is sandwiched between the positive electrode sheet and the negative electrode sheet; the wound structure comprises a bent region; the positive electrode sheet comprises at least one positive electrode bent portion located in the bent region; the negative electrode sheet comprises at least one negative electrode bent portion located in the bent region; along a winding axis direction of the wound structure, two ends of the separator extend beyond the positive electrode bent portion and the negative electrode bent portion; the protective layer is adhered to a surface of the positive electrode bent portion and/or a surface of the negative electrode bent portion; and along the winding axis direction of the wound structure, at least one end of the protective layer extends beyond the separator.
